# EUROPÄISCHE PATENTANMELDUNG

(11) **EP 2 362 510 A2**
(43) Veröffentlichungstag der Anmeldung: **31.08.2011**
(21) Anmeldenummer: 11156059.5
(22) Anmeldetag: 25.02.2011
(51) Int. Cl.: H02G 5/02

(54) **Sammelschienen-Halterungsanordnung**

(30) Priorität: 14.04.2010 DE 202010004982 U; 26.02.2010 DE 202010002892 U
(71) Anmelder: Greiner Schaltanlagen GmbH, 67304 Kerzenheim (DE)
(72) Erfinder: Christmann, Marc, 67304 Kerzenheim (DE)
(74) Vertreter: Katscher Habermann Patentanwälte

(57) **Zusammenfassung**

Eine Halterungsanordnung für die ortsfeste Montage und Halterung von im Querschnitt im Wesentlichen rechteckigen oder quadratischen Sammelschienen (22e) von insbesondere dreiphasigen elektrischen Niederspannungs-Energieverteilernetzen in vorgegebenem Abstand auf einem Untergrund, wobei die Halterungsanordnung aus einem Paar von in Übereinanderlage auf dem Untergrund befestigbaren langgestreckten Halterungsbauteilen (220) aus elektrisch isolierendem Material besteht, die jeweils für die Halterung von im Querschnitt rechteckigen oder quadratischen Sammelschienen (22e) mit unterschiedlicher Größe ihrer Querschnittsfläche querverlaufenden Aufnahme-Vertiefungen (224a, 224d) in den jeweils vier um 90° zueinander verlaufenden Flachseiten (20a, 20b, 20c, 20d) der Halterungsbauteile (220) aufweisen, wobei in den Bodenflächen zumindest eines Teils der querverlaufenden Aufnahme-Vertiefungen (224a, 224d) zusätzliche querverlaufende Vertiefungen geringerer Breite und größerer Tiefe für weitere Sammelschienen mit abweichenden Querschnitten vorgesehen sind. Die jeweils einander zugeordneten querverlaufenden Aufnahme-Vertiefungen (224a, 224d) der Halterungsbauteile (220) sind hinsichtlich ihrer von der zugeordneten Flachseite (20b, 20c) des Halterungsbauteils (220) aus gemessenen Tiefe so angeordnet, dass jede der im Querschnitt rechteckigen oder quadratischen Sammelschienen (22e) zwischen den beiden Halterungsbauteilen (220) so festgelegt werden kann, dass eine dem Untergrund (50) abgewandte Oberseite der betreffenden Sammelschiene (22e) einen für alle Sammelschienen (22e) übereinstimmenden Abstand von dem Untergrund (50) aufweist.

## Beschreibung

Die Erfindung betrifft eine Halterungsanordnung für die ortsfeste Montage und Halterung von im Querschnitt im Wesentlichen rechteckigen oder quadratischen Sammelschienen von insbesondere dreiphasigen elektrischen Niederspannungs-Energieverteilernetzen in vorgegebenem Abstand auf einem Untergrund, wobei die Halterungsanordnung ein Paar von in Übereinanderlage auf dem Untergrund befestigbaren langgestreckten Halterungsbauteilen aus elektrisch isolierendem Material aufweist, wobei die Halterungsbauteile an den Querschnitt der jeweiligen Sammelschiene angepasste querverlaufende Vertiefungen zur passenden Aufnahme der Sammelschienen in den einander zugewandten äußeren Flachseiten der Halterungsbauteile in der Montageposition aufweisen, wobei die langgestreckten Halterungsbauteile jedes Bauteilpaars gleiche Abmessungen aufweisen und in den Flachseiten der Halterungsbauteile eine der Anzahl der zu halternden Sammelschienen entsprechende Anzahl von im vorgegebenen Abstand voneinander querverlaufenden Aufnahme-Vertiefungen vorgesehen sind, deren Breite jeweils der Breite und deren Tiefe jeweils höchstens gleich der Dicke der zu halternden Sammelschienen entsprechend bemessen sind, und wobei Befestigungsmittel zur Befestigung des Paars von Halterungsbauteilen in Übereinanderlage mit den in den zueinander ausgerichteten Aufnahme-Vertiefungen eingespannten Sammelschienen auf dem Untergrund vorgesehen sind.

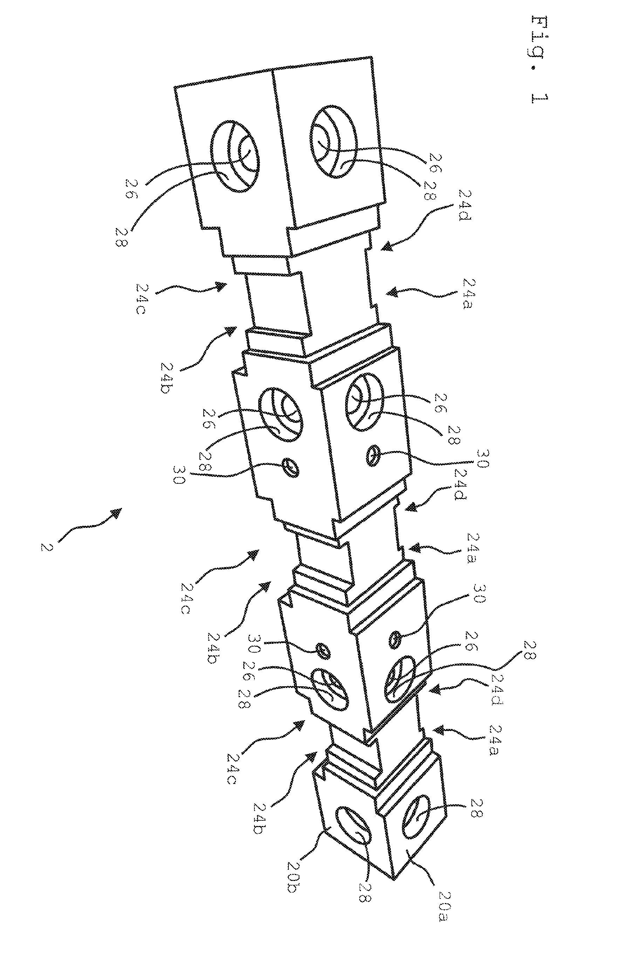

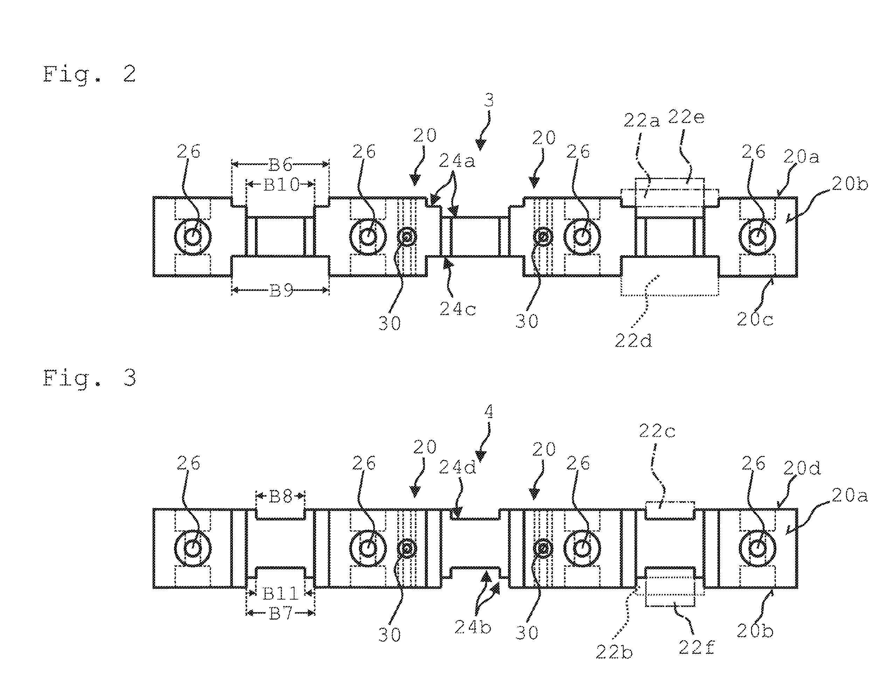

Paarweise zur Klemmmontage von Sammelschienen in Niederspannungs-Energieverteilersystemen einsetzbare derartige Sammelschienenträger oder Halterungsbauteile sind aus der DE 195 11 358 A1 bekannt. Die Verbindung mit den Figuren 1 bis 3 dieser Veröffentlichung beschriebenen Sammelschienenträger sind dabei in drei Ihrer jeweils um 90° zueinander versetzten äußeren Flachseiten mit querverlaufenden Ausnehmungen unterschiedlicher Tiefe versehen, so dass sich mit Hilfe jeweils eines Paar dieser Sammelschienenträger in der in Figur 2 der Veröffentlichung veranschaulichten Weise Halterungsanordnung für Sammelschienen mit drei verschiedenen Breitenabmessungen erstellen lassen. In der Praxis sind aber in Niederspannungs-Energieverteilungsnetzen Sammelschienen mit sechs verschiedenen Querschnitten Abmessungen in Gebrauch, welche je nach der in den jeweiligen Sammelschienen höchstens zu erwartenden elektrischen Stromstärke ausgewählt werden.

Der Erfindung liegt die Aufgabe zugrunde, die bekannte Sammelschienen-Halterungsanordnung so weiter zu bilden, dass mittels eines Paares von identisch ausgebildeten Halterungsbauteilen die sechs verschiedenen gebräuchlichen Sammelschienen unterschiedlicher Höhen- und Breitenabmessungen in der erforderlichen Weise sicher und schnell auf einem zugehörigen Untergrund montierbar und wieder demontierbar sind.

Ausgehend von einer Halterungsanordnung in der eingangs erwähnten Art wird diese Aufgabe erfindungsgemäß dadurch gelöst, dass für die Halterung von im Querschnitt rechteckigen oder quadratischen Sammelschienen mit unterschiedlicher Größe ihrer Querschnittsfläche die querverlaufenden Aufnahme-Vertiefungen in den jeweils vier um 90° zueinander verlaufenden äußeren Flachseiten der Halterungsbauteile vorgesehen sind, und dass in den Bodenflächen zumindest eines Teils der querverlaufenden Aufnahme-Vertiefungen zusätzlich querverlaufende Vertiefungen geringerer Breite und größerer Tiefe für weitere Sammelschienen mit abweichenden Querschnitten vorgesehen sind.

Dabei kann die Ausgestaltung so getroffen sein, dass die in den in den Flachseiten der Halterungsbauteile vorgesehenen querverlaufenden Aufnahme-Vertiefungen vorgesehenen zusätzlichen querverlaufenden Vertiefungen eine geringere Breite und größere Tiefe als die Aufnahme-Vertiefungen in ihren an die zugeordneten Flachseiten anschließenden Bereichen haben, und dass die von der zugeordneten Flachseite des Halterungsbauteils aus gemessene Tiefe der zusätzlichen querverlaufenden Vertiefungen jeweils der halben zwischen den im Querschnitt längeren Begrenzungskanten einer Querschnittsfläche der im Querschnitt rechteckigen Sammelschienen gemessenen Dicke einer jeweils zugeordneten Sammelschiene und deren Breite gleich der Länge der Begrenzungskanten der Sammelschiene entsprechend bemessen ist.

In vorteilhafter Weiterbildung der Erfindung kann außerdem in wenigstens einer der Flachseiten der Halterungsbauteile jeweils wenigstens eine weitere zusätzliche querverlaufende Vertiefung geringerer Breite und größerer Tiefe vorgesehen sind, deren von der zugeordneten Flachseite des Halterungsbauteils aus gemessene Tiefe jeweils der halben Länge der längeren Begrenzungskanten der Querschnittsflächen der im Querschnitt rechteckigen jeweils zugeordneten Sammelschiene und deren Breite gleich der zwischen den gegenüberliegenden Flachseiten der zugehörigen Sammelschiene gemessenen Dicke ist.

Von Vorteil ist dann eine Ausgestaltung, bei welcher jeweils zwei in Richtung der Längsmittelachse der Halterungsbauteile voneinander beabstandete zusätzliche Vertiefungen in jeder Aufnahme-Vertiefung der Halterungsbauteile vorgesehen sind. In aus paarweise zusammengespannten derart ausgebildeten Halterungsbauteile aufgebauten Halterungsanordnungen können dann in jeder Aufnahme-Vertiefung jeweils zwei, insgesamt also sechs Sammelschienen gleicher Querschnittsabmessungen gehaltert werden.

Gemäß einer besonders vorteilhaften Ausgestaltung des Erfindungsgedankens ist vorgesehen, dass die für die Halterung von im Querschnitt rechteckigen oder quadratischen Sammelschienen mit unterschiedlicher Größe ihrer Querschnittsfläche vorgesehenen, jeweils einander zugeordneten querverlaufenden Aufnahme-Vertiefungen der Halterungsbauteile hinsichtlich ihrer von der zugeordneten Flachseite des Halterungsbauteils aus gemessenen Tiefe so angeordnet sind, dass jede der im Querschnitt rechteckigen oder quadratischen Sammelschienen zwischen den beiden Halterungsbauteilen so festgelegt werden kann, dass eine dem Untergrund abgewandte Oberseite der betreffenden Sammelschiene einen für alle Sammelschienen übereinstimmenden Abstand von dem Untergrund aufweist.

Üblicherweise müssen einzelne Bedien- und Schaltelemente sowie Anzeigeelemente auf einer die Sammelschienen bedeckenden Abdeckung angeordnet sein, wobei die Bedien-, Schalt- und Anzeigeelemente mit den Sammelschienen elektrisch leitend kontaktiert werden und die Abdeckung einen ungewollten Zugriff von Personen auf die strom- oder spannungsführenden Sammelschienen verhindert. Derartige Abdeckungen sowie einzelne Bedien- oder Anzeigeelemente sollen aus Kostengründen aus vorgefertigten Bauteilen bestehen und mit lediglich geringen Anpassungen verwendet werden können. Durch die unterschiedliche Anordnung der einzelnen Sammelschienen relativ zu dem Untergrund, bzw. zu einer von außen zugänglichen Vorderseite eines Schaltanlagengehäuses müssen die im Einzelfall verwendeten Abdeckungen, bzw. zumindest die Kontaktierungseinrichtungen der Bedien- oder Anzeigeelemente individuell angepasst werden.

Mit einer vorangehend beschriebenen Ausgestaltung der Halterungsbauteile kann erreicht werden, dass unabhängig von der im Einzelfall verwendeten und zwischen den beiden Halterungsteilen klemmend gehaltenen Sammelschiene deren von außen zugängliche Oberseite einen gleichbleibenden Abstand zu dem Untergrund, bzw. einer Vorderseite eines Schaltanlagengehäuses aufweist. Die Oberseite aller Sammelschienen weist folglich unabhängig von den Abmessungen der jeweiligen Sammelschienen immer einen vorgegebenen Abstand zum Untergrund auf. Es können demzufolge einheitliche Abdeckungen sowie einheitliche Kontaktierungseinrichtungen der Bedien- und Anzeigeelemente verwendet werden, ohne dass eine individuelle Anpassung der einzelnen Abdeckungen oder Elemente erforderlich wird.

Eine einheitliche Anordnung der Oberseiten aller Sammelschienen kann in einfacher Weise dadurch erreicht werden, dass für alle Sammelschienen die von der zugeordneten Flachseite eines der beiden Halterungsbauteile aus gemessene Tiefe der für die Halterung der betreffenden Sammelschiene vorgesehenen querverlaufenden Aufnahme-Vertiefung gleich ist und die von der zugeordneten Flachseite des anderen Halterungsbauteils aus gemessene Tiefe der für die Halterung der betreffenden Sammelschiene vorgesehenen querverlaufenden Aufnahme-Vertiefung an die Abmessungen der betreffenden Sammelschiene angepasst ist, so dass die dem Untergrund abgewandte Oberseite der betreffenden Sammelschiene den für alle Sammelschienen übereinstimmenden Abstand von dem Untergrund aufweist. Die jeweils einander zugeordneten Aufnahme-Vertiefungen, in denen eine Sammelschiene aufgenommen werden kann, müssen an die Abmessungen der Sammelschiene angepasst sein. Die beiden Aufnahme-Vertiefungen müssen jedoch nicht symmetrisch relativ zu den Flachseiten der beiden Halterungsbauteile angeordnet sein. Vielmehr ist es zweckmäßig, wenn durch eine der beiden Aufnahme-Vertiefungen ein für alle Sammelschienen gleichbleibender Abstand zum Untergrund vorgegeben wird und die für die Aufnahme der betreffenden Sammelschiene zugeordnete Aufnahme-Vertiefung in dem anderen Halterungsbauteil die noch fehlende Tiefe gemessen von der zugeordneten Flachseite des Halterungsbauteils aufweist.

Wenn die beiden Halterungsbauteile, die für die klemmende Aufnahme der Sammelschienen verwendet werden, keine identische Formgebung aufweisen, könnten die Aufnahme-Vertiefungen in einem ersten Halterungsbauteil alle die gewünschte identische Tiefe aufweisen und die daran angepassten Aufnahme-Vertiefungen in einem zweiten Halterungsbauteil jeweils diejenige Tiefe aufweisen, die für die Aufnahme der verschiedenen Sammelschienen mit den jeweiligen Abmessungen erforderlich ist.

Wenn die beiden Halterungsbauteile jedoch eine identische Formgebung aufweisen sollen und gleichzeitig möglichst viele verschiedene Sammelschienen in den jeweiligen Vertiefungen aufgenommen werden können sollen, weist jedes der beiden Halterungsbauteile für jede Sammelschiene an einer seiner Flachseiten eine Aufnahme-Vertiefung mit der gewünschten Tiefe auf und an einer seiner anderen Flachseiten oder in derselben Flachseite beabstandet zu der ersten Aufnahme-Vertiefung die für diese Sammelschiene erforderliche zugeordnete Aufnahme-Vertiefung mit der daran angepassten, regelmäßig größeren Tiefe auf. In Abhängigkeit von der verwendeten Sammelschiene muss demzufolge eine geeignete Zuordnung der jeweiligen Flachseiten der Halterungsbauteile erfolgen. Zudem muss die geeignete Ausrichtung der Halterungsbauteile in Längsrichtung gewählt und vorgegeben werden.

Die Halterungsbauteile können demzufolge für die Aufnahme der verschiedenen Sammelschienen um die Längsachse in vier verschiedene Stellungen verkippt sowie um eine senkrecht dazu verlaufende Mittenachse verdreht und in umgekehrter Ausrichtung in Übereinanderlage angeordnet und zur klemmenden Aufnahme von Sammelschienen verwendet werden. Je nach Anordnung und Ausrichtung der beiden Halterungsbauteile kann die zugeordnete Sammelschiene mehrfach in Längsrichtung beabstandet zueinander montiert und durch die Halterungsbauteile in der jeweils vorgesehenen Position festgelegt werden.

Um nicht nur eine für alle Sammelschienen gleichbleibende Anordnung der Oberseiten der verschiedenen Sammelschienen zu gewährleisten, sondern darüber hinaus eine in Längsrichtung der Halterungsbauteile für alle Sammelschienen identische Anordnung zu ermöglichen ist vorgesehen, dass für alle Sammelschienen die jeweils vorgesehene querverlaufende Aufnahme-Vertiefung eine in Richtung der Längsmittelachse der Halterungsbauteile übereinstimmend angeordnete Anschlagsfläche aufweist, mit welcher eine Ausrichtung der Sammelschienen in Längsrichtung der Halterungsbauteile vorgebbar ist.

Die querverlaufenden Aufnahme-Vertiefungen zwischen zwei beabstandeten Bereichen ohne Vertiefungen, die für eine Befestigung der Halterungsbauteile vorgesehen sind, können jeweils zwei Bereiche mit einer unterschiedlichen Breite und Tiefe aufweisen. Diese beiden Bereiche können übergangslos aneinander angrenzend ausgestaltet sein oder aber beabstandet zueinander angeordnet und durch einen Trennsteg voneinander getrennt sein.

Für die Befestigung der Halterungsanordnung in der bestimmungsgemäßen Montageposition auf dem Untergrund sind zweckmäßig in zu den querverlaufenden Vertiefungen versetzte Bereichen der Halterungsbauteile jeweils von einer Flachseite zur gegenüberliegenden Flachseite durchgehende Befestigungsbohrungen für

Befestigungsschrauben vorgesehen.

Dabei ist es dann von Vorteil, wenn die Befestigungsbohrungen jeweils beidseitig in ihren Endbereichen mit Ansenkungen zur Aufnahme der Köpfe von zugeordneten Befestigungsschrauben versehen sind.

Die Anordnung der Befestigungsbohrungen erfolgt dann bevorzugt so, dass die Längsmittelachsen von jeweils zwei zwischen den beiden um 90° zueinander verlaufenden äußeren Flachseitenpaaren der Halterungsbauteile vorgesehenen Befestigungsbohrungen sich rechtwinklig schneidend in jeweils gleichen Querschnittsebenen der Halterungsbauteile angeordnet sind.

In Längsrichtung zu den Befestigungsbohrungen versetzt können in vorteilhafter Weiterbildung der Erfindung zusätzliche Gewindebohrungen zur Anbringung weiterer Bauteile z. B. elektrische Überschläge oder Kriechströme verhindernder Isolierungen in den Flachseiten der Halterungsbauteile vorgesehen sein.

Dabei sind dann zweckmäßig jeweils wenigstens zwei in Längsrichtung voneinander beabstandete Gewindebohrungen in den Flachseiten vorgesehen.

Die Gewindebohrung sind mit Vorteil jeweils von einer zur gegenüberliegenden Flachseite durchgeführt, so dass sie die Schraubbefestigung weiterer Bauteile auf den jeweils gegenüberliegenden Flachseiten der Halterungsbauteile ermöglichen.

Zweckmäßig sind dabei die Längsmittelachsen von jeweils zwei zwischen den beiden um 90° zueinander verlaufenden äußeren Flachseitenpaaren der Halterungsbauteile vorgesehenen Gewindebohrungen sich rechtwinklig schneidend in jeweils gleichen Querschnittsebenen der Halterungsbauteile angeordnet, wobei die Befestigungsbohrungen und die Gewindebohrungen jeweils in gleichen Querschnittsebenen der Halterungsbauteile vorgesehen sind.

Der Halterungsanordnung können ebenflächige Platten- oder Streifenelemente vorgegebener Größe aus elektrisch isolierendem Plattenmaterial zur Befestigung auf jeweils einer zugeordneten Flachseite der Halterungsbauteile zugeordnet sein, wobei dann in den Platten- oder Streifenelementen wenigstens zwei in der bestimmungsgemäßen Befestigungsstellung zu Gewindebohrungen der zugeordneten Flachseite des jeweiligen Halterungsbauteils fluchtend ausgerichtete Durchgangsöffnungen vorgesehen sind.

Die Erfindung ist in der folgenden Beschreibung in Verbindung mit der Zeichnung näher erläutert und zwar zeigt bzw. zeigen:
Fig. 1 eine perspektivische Ansicht eines Ausführungsbeispiels eines Halterungsbauteils für Sammelschienen, welche in paarweiser Zusammenstellung mit einem zweiten identischen Halterungsbauteil zu einer Halterungsanordnung für drei Sammelschienen eines dreiphasigen elektrischen Netzes mit insgesamt sechs unterschiedlichen Querschnittsabmessungen einsetzbar ist,

Fig.2 eine Ansicht auf eine der äußeren Flachseiten des Halterungsbauteils gesehen in Richtung des Pfeils 2 in Fig. 1,
Fig.3 eine Ansicht gesehen Richtung des Pfeils 3 in Fig. 2,
Fig.4 eine Ansicht gesehen Richtung des Pfeils 4 in Fig. 3,
Fig.5 eine Ansicht gesehen Richtung des Pfeils 5 in Fig. 4,
Fig.6a eine Draufsicht auf einen Teilabschnitt einer im Querschnitt rechteckigen mit einem Paar von Halterungsbauteilen gemäß den Fig. 1 bis 5 montierbaren Sammelschiene vorgegebener erster Breiten- und Dickenabmessung,
Fig. 6b eine Schnittansicht entlang der Pfeile 6b-6b in Fig. 6a,
Fig.7a eine Draufsicht auf einen Teilabschnitt einer im Querschnitt rechteckigen mit einem Paar von Halterungsbauteilen gemäß den Fig. 1 bis 5 montierbaren Sammelschiene vorgegebener zweiter Breiten- und Dickenabmessung,
Fig.7b eine Schnittansicht entlang der Pfeile 7b-7b in Fig. 7a,
Fig.8a eine Draufsicht auf einen Teilabschnitt einer im Querschnitt rechteckigen mit einem Paar von Halterungsbauteilen gemäß den Fig. 1 bis 5 montierbaren Sammelschiene vorgegebener dritter Breiten- und Dickenabmessung,
Fig.8b eine Schnittansicht entlang der Pfeile 8b-8b in Fig. 8a,
Fig.9a eine Draufsicht auf einen Teilabschnitt einer im Querschnitt rechteckigen mit einem Paar von Halterungsbauteilen gemäß den Figuren 1 bis 5 montierbaren Sammelschiene vorgegebener vierter Breiten- und Dickenabmessung,
Fig. 9b eine Schnittansicht entlang der Pfeile 9b-9b in Fig. 9a,
Fig.10a eine Draufsicht auf einen Teilabschnitt einer im Querschnitt rechteckigen mit einem Paar von Halterungsbauteilen gemäß den Fig. 1 bis 5 montierbaren Sammelschiene vorgegebener fünfter Breiten- und Dickenabmessung,
Fig. 10b eine Schnittansicht entlang der Pfeile 10b-10b in Fig. 10a,
Fig. 11a eine Draufsicht auf einen Teilabschnitt einer im Querschnitt rechteckigen mit einem Paar von Halterungsbauteilen gemäß den Fig. 1 bis 6 montierbaren Sammelschiene vorgegebener sechster Breiten- und Dickenabmessung,
Fig. 11b eine Schnittansicht entlang der Pfeile 11b-11b in Fig. 11a,
Fig. 12a eine durch Übereinanderlage von zwei Halterungsbauteilen gemäß den Figuren 1 bis 5 gebildete Halterungsanordnung für Sammelschienen, wobei die Klemmhalterung von zwei im Schnitt dargestellten Sammelschienen unterschiedlicher Querschnittsabmessungen veranschaulicht ist,
Fig. 12b eine in Fig. 12a entsprechende Halterungsanordnung, bei welcher die Halterungsbauteile mit jeweils um 90° versetzten Flachseiten zusammengestellt sind, wobei die Klemmhalterung zwei verschiedenen Sammelschienen mit von den in Fig. 12a dargestellten Sammelschienen abweichenden Querschnittsabmessungen im Schnitt dargestellt ist,
Fig. 13 eine isometrische Ansicht eines gegenüber dem in Fig. 1 gezeigten Ausführungsbeispiel weitergebildeten zweiten Ausführungsbeispiels eines Halterungsbauteils für Sammelschienen, welches in paarweiser Zusammenstellung mit einem identischen Halterungsbauteil zu einer Halterungsanordnung von wenigstens drei Sammelschienen in elektrischen Netzen einsetzbar ist,
Fig. 14 eine durch Übereinanderlage von zwei Halterungsbauteilen gem. Fig. 13 gebildeten Halterungsanordnung für Sammelschienen, wobei die paarweise voneinander beabstandete Klemmhalterung von insgesamt sechs Sammelschienen gem. Fig. 7a und 7b veranschaulicht ist,
Fig. 15 eine durch Übereinanderlage von zwei Halterungsbauteilen gem. Fig. 14 gebildete Halterungsanordnung für Sammelschienen, wobei die paarweise voneinander beabstandete Klemmhalterung von drei Sammelschienen gem. Fig. 10a und 10b in einer gegenüber 12b um 90° verdrehten aufrechten Position veranschaulicht ist,
Fig. 16 eine durch Übereinanderlage von zwei abweichend ausgestalteten Halterungsbauteilen gebildete Halterungsanordnung für Sammelschienen, wobei die Klemmhalterung von drei im Schnitt dargestellten Sammelschienen gleicher Querschnittsabmessungen veranschaulicht ist,
Fig. 17 eine durch Übereinanderlage von zwei abweichend ausgestalteten Halterungsbauteilen gebildete Halterungsanordnung für Sammelschienen, wobei die Klemmhalterung von drei im Schnitt dargestellten Sammelschienen gleicher Querschnittsabmessungen mit einer abweichenden Querschnittsfläche veranschaulicht ist,
Fig. 18 eine durch Übereinanderlage von zwei abweichend ausgestalteten Halterungsbauteilen gebildete Halterungsanordnung für Sammelschienen, wobei die Klemmhalterung von drei im Schnitt dargestellten Sammelschienen gleicher Querschnittsabmessungen mit einer wiederum abweichenden Querschnittsfläche veranschaulicht ist,
Fig. 19 eine durch Übereinanderlage von zwei abweichend ausgestalteten Halterungsbauteilen gebildete Halterungsanordnung für Sammelschienen, wobei die Klemmhalterung von drei im Schnitt dargestellten Sammelschienen gleicher Querschnittsabmessungen mit einer wiederum abweichenden Querschnittsfläche veranschaulicht ist,
Fig. 20 eine durch Übereinanderlage von zwei abweichend ausgestalteten Halterungsbauteilen gebildete Halterungsanordnung für Sammelschienen, wobei die Klemmhalterung von drei im Schnitt dargestellten Sammelschienen gleicher Querschnittsabmessungen mit einer wiederum abweichenden Querschnittsfläche veranschaulicht ist,
Fig. 21 eine durch Übereinanderlage von zwei abweichend ausgestalteten Halterungsbauteilen gebildete Halterungsanordnung für Sammelschienen, wobei die Klemmhalterung von drei im Schnitt dargestellten Sammelschienen gleicher Querschnittsabmessungen mit einer wiederum abweichenden Querschnittsfläche veranschaulicht ist.

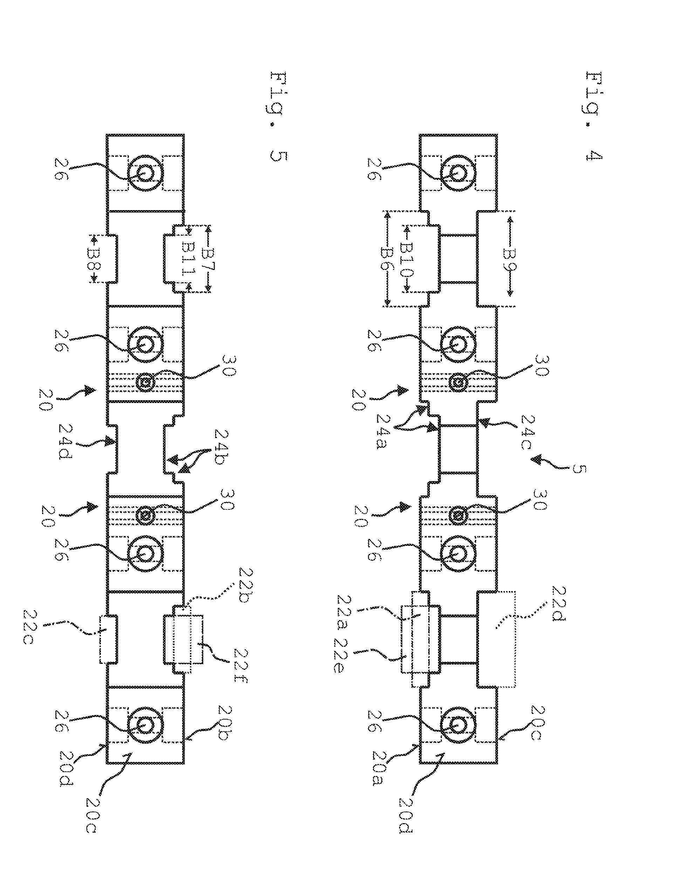

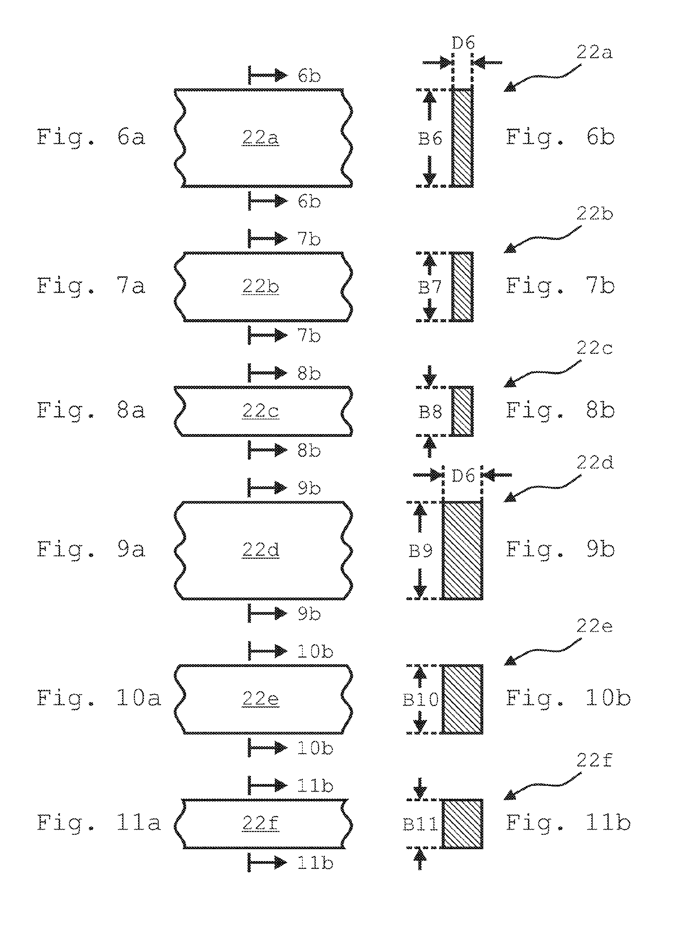

Das in Fig. 1 in perspektivischer Darstellung und in den Fig. 2 bis 5 in unterschiedlicher Ansicht auf die äußeren Flachseiten 20a, 20b, 20c, 20d gezeigte, in seiner Gesamtheit mit 20 bezeichnete Ausführungsbeispiel eines Halterungsbauteils ist in Verbindung mit einem zweiten identisch ausgebildeten Halterungsbauteil 20 zu einer erfindungsgemäßen Halterungsanordnung für langgestreckte, im Querschnitt rechteckige Sammelschienen mit sechs - in den Fig. 6a bis 11b jeweils gesondert dargestellten - unterschiedlichen Querschnittsabmessungen in Klemmmontage z. B. auf der Rückwand eines Verteilerschranks eines Niederspannungs-Energieverteilernetzes zusammenbaubar.

Der aus elektrisch isolierendem Material hergestellte Halterungsbauteil 20 ist im dargestellten Fall zur Halterungsanordnung für jeweils drei parallel zueinander mit seitlichem Abstand verlaufende Sammelschienen 22a, 22b, 22c, 22d, 22e, 22f eines dreiphasigen elektrischen Energieverteilernetzes mit - in Abhängigkeit von den in den Sammelschienen im Betrieb jeweils maximal auftretenden Stromstärken bestimmt. Der Halterungsbauteil 20 weist grundsätzlich die Form eines langgestreckten, im Querschnitt quadratischen Vierkantstabs auf, in dessen äußeren Flachseiten 20a, 20b, 20c und 20d jeweils im vorgesehenen Montageabstand der Sammelschienen querverlaufende Vertiefungen 24a, 24b, 24c, 24d zur Aufnahme von Sammelschienen 22a - 22f unterschiedlicher Abmessungen eingearbeitet sind, wobei die Vertiefungen 24a - 24d jeweils eine der zu montierenden Sammelschiene entsprechende Breite und eine Tiefe haben, die etwa der halben Stärke der jeweiligen Sammelschiene 22a - 22f entspricht.

In den zwischen den Vertiefungen liegenden Bereichen sind jeweils von einer zur gegenüberliegenden Flachseite 20a, 20c; 20b, 20d durchgehende Befestigungsbohrungen 26 vorgesehen, durch welche die Gewindeschäfte von - nicht gezeigten - Befestigungsschrauben hindurchführbar sind, mit denen eine jeweils von einem Paar von Halterungsbauteilen 20 gebildete Halterungsanordnung auf dem Untergrund befestigbar ist.

Die Befestigungsbohrungen 26 sind jeweils in ihren äußeren Endbereichen mit Ansenkung 28 zur Aufnahme der Köpfe der zugeordneten Befestigungsschrauben versehen.

In der Zeichnung ist erkennbar, dass die Längsmittelachse von jeweils zwei zwischen den beiden um 90° zueinander verlaufenden äußeren Flachseiten-Paaren der Halterungsbauteile 20 vorgesehenen Befestigungsbohrungen sich rechtwinklig schneidend in jeweils gleichen Querschnittsebenen (Mittelebenen) der Halterungsbauteile 20 angeordnet sind.

Zusätzlich sind in mindestens zwei der zwischen benachbarten querverlaufenden Vertiefungen 24a - 24d liegenden Bereichen der äußeren ebenflächigen Flachseiten 22a -22d zu den Befestigungsbohrungen 26 versetzte Gewindebohrungen 30 vorgesehen, die ebenfalls von einer zur gegenüberliegenden Flachseite 20a, 20c bzw. 20b, 20c durchgehen. Diese Gewindebohrungen 30 sind - ebenso wie die Befestigungsbohrungen 26 - jeweils in gleichen Querschnittsebenen und sich rechtwinklig schneidend im jeweiligen Halterungsbauteil 20 angeordnet.

In den Fig. 2 bis 5, in denen jeweils Draufsichten auf die vier äußeren Flachseiten 20b, 20a, 20d und 20c des Halterungsbauteil 20 gezeigt sind, ist erkennbar, dass die in die Flachseite 20a eingebrachten querverlaufenden Vertiefungen 24a zweistufig sind, d. h. jeweils von einem Vertiefungsteil größerer Tiefe und geringerer Breite und einem zweiten Vertiefungsteil geringerer Tiefe und größerer Breite gebildet werden, während die in der gegenüberliegenden Flachseite 20c vorgesehene Vertiefung 24c jeweils einstufig mit vorgegebener Tiefe und Breite quer über den Halterungsbauteil 20 verlaufen. Ähnlich - jedoch mit abweichender Kombination von Breiten- und Tiefenabmessungen - sind die in Flachseiten 20b angeformten Vertiefungen zweistufig und die in der gegenüberliegenden Flachseite 20c vorgesehenen Vertiefungen 24d einstufig ausgebildet. Dadurch ergeben sich beim Aufeinanderlegen von jeweils zwei Halterungsteilen mit den einander entsprechenden Flachseiten insgesamt sechs allseits geschlossene querverlaufende Vertiefungen für insgesamt sechs verschiedene im Querschnitte rechteckige Sammelschienen 22a bis 22f.

In den Fig. 6a, 6b bis 11 a, 11 b sind Abschnitte der der heute verwendeten Sammelschienen bzw. jeweils Querschnitte derselben dargestellt. Aus den Zeichnungsfiguren ist entnehmbar, dass von den insgesamt sechs verschiedenen Sammelschienen jeweils drei, nämlich die Sammelschienen 22a, 22b und 22c gleiche Dicke D6 aber unterschiedliche Breite B6, 87, B8 haben, während die Sammelschienen 22d, 22e und 22f haben eine größere Dicke D9 haben, in ihren Breitenabmessungen B9, B10 und B11 jedoch unterschiedlich sind, wobei B9 der Breite B6, B10 der Breite B7 und B11 der Breite 88 entspricht. Für Niederspannungs-Energieverteilernetze stehen heute serienmäßig Sammelschienen aus elektrisch leitfähigem Kupfermaterial in den Querschnlttsabmessungen 30 x 5,20 x 5 und 12 x 5 mm sowie 30 x10, 20 x10 und 12 x10 mm zur Verfügung.

Da die in jedem Halterungsbauteil 20 vorgesehene Vertiefungen bzw. Teilvertiefungen jeweils gleich der halben Dicke einer zugeordneten Sammelschienen entsprechend bemessen sind, ist nun klar, dass mittels eines Paares von in Aufeinanderlage seiner entsprechenden Flachseite auf einem Untergrund befestigte Halterungsschienen 20 insgesamt allseitig geschlossene Aufnahmen zur Halterung der Sammelschienen 22a bis 22f gebildet werden können. In den Fig. 2 bis 5 sind die Breitenabmessungen der querverlaufenden Vertiefungen und zum Teil strichpunktiert auch die zugehörigen Sammelschienen dargestellt, so dass die Zuordnung von Vertiefungen bzw. Vertiefungsabschnitten und Sammelschienen erkennbar wird.

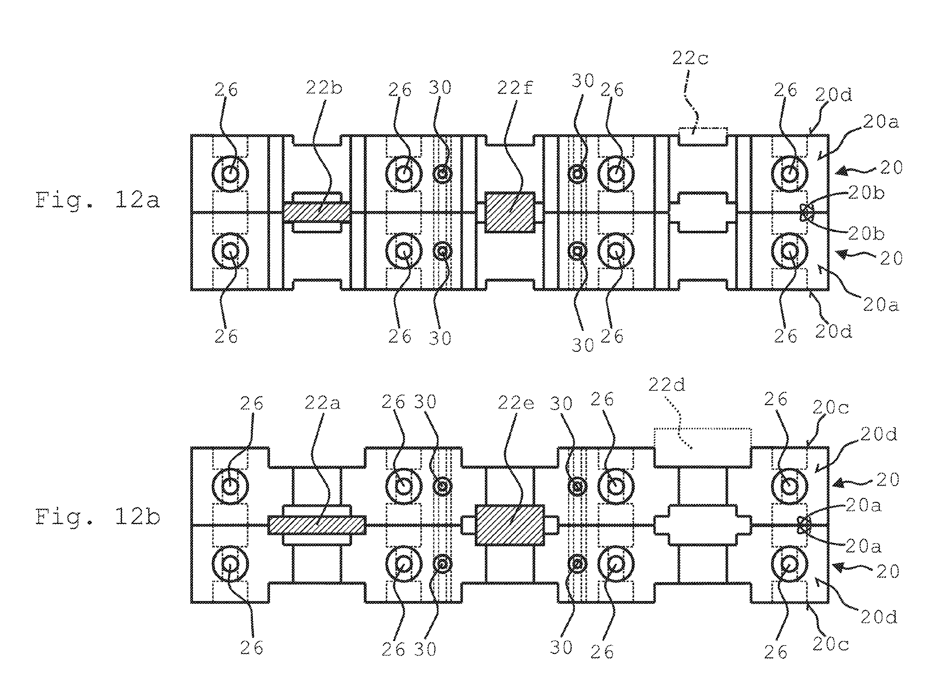

In Fig. 12a und 12b sind zwei Möglichkeiten der Bildung einer Halterungsanordnung aus jeweils einem Paar von Halterungsbauteilen 20 erstellbaren Halterungsanordnungen gezeigt, wobei die in der jeweiligen Halterungsanordnung montierbaren Sammelschiene unterschiedlicher Größe zum Teil im Schnitt und zum Teil strichpunktiert angedeutet sind. Die zeichnerischen Darstellungen sind an sich selbst erklärend, d. h. es ist erkennbar, dass mittels eine Paars von Halterungsbauteilen 20 gemäß den Fig. 1 bis 5 sechs Sammelschienen mit unterschiedlichen äußeren Abmessungen und somit Querschnittsflächen, wie sie in den Fig. 6a bis 11b gezeigt sind, mit Abstand voneinander und oberhalb des Untergrunds in einem Schaltschrank oder dergleichen befestigbar sind, wobei die durch die Befestigungsbohrungen 26 in zugeordnete Aufnahmebohrungen im Untergrund eingeschraubten Befestigungsschrauben die aufeinanderliegenden Halterungsbauteile 20 in dichte Anlage aneinander pressen, wobei dann eine Einklemmung der Sammelschienen in den jeweils zugehörigen von den querverlaufenden Vertiefungen gebildeten Aufnahmen bewirken.

Die bereits erwähnten zusätzlich zu den Befestigungsbohrungen 26 vorgesehenen Gewindebohrungen 30 können zur Befestigung weiterer Anbauten, beispielsweise elektrische Überschläge zum Gehäuse oder Kriechströme verhindernden Bauteilen dienen.

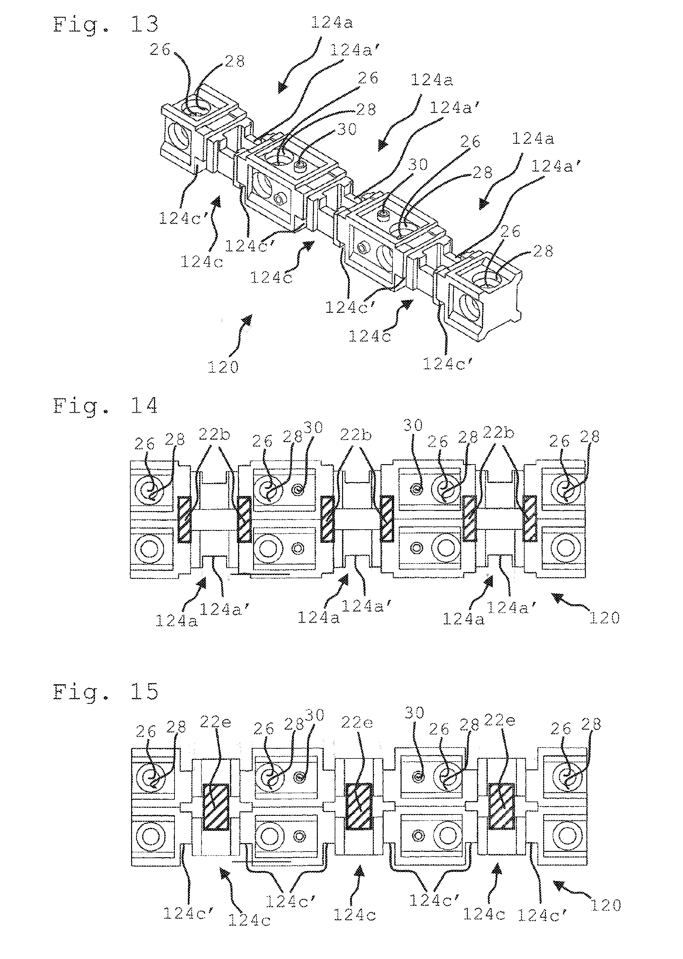

Das in Fig. 13 gezeigte abgewandelte Ausführungsbeispiel zeigt einen Halterungsbauteil 120, welcher gegenüber dem in Fig. 1 gezeigten Halterungsbauteil 20 einerseits in Bezug auf eine möglichst materialsparende kostengünstige Ausgestaltung in der äußeren Form weiterentwickelt ist. Darüber hinaus sind im dargestellten Fall die mit den zusätzlichen querverlaufenden Vertiefungen versehenen Aufnahme-Vertiefungen 124a bis 124d zum Teil mit weiteren zusätzlich querverlaufenden Vertiefungen versehen, deren in Längsrichtung des Halterungsbauteils gemessene Breite geringer und deren Tiefe größer als die Breite und Tiefe der in den Halterungsbauteilen 20 vorgesehenen zusätzlichen querverlaufenden Vertiefungen ist.

Im speziellen Fall sind im Boden der zusätzlichen Vertiefungen der Aufnahme-Vertiefungen 124a mittig die weiteren zusätzlichen querlaufenden Vertiefungen 124a' zur Halterung von jeweils einer Sammelschiene 22e (Fig. 10a, b) vorgesehen, die dann in der in Fig. 15 veranschaulichten Weise in - gegenüber der Halterung durch Halterungsbauteile 20 - um 90° verdrehter Position hochkant zwischen zwei Halterungsbauteilen 120 einspannbar sind.

In den zusätzlichen Vertiefungen der Aufnahme-Vertiefungen 124c sind jeweils paarweise zwei in Längsrichtung des Halterungsbauteils 120 voneinander beabstandete weitere zusätzliche querlaufende Vertiefungen 124c' für Sammelschienen 22b (Fig. 7a, b) vorgesehen. Dadurch wird es dann möglich, in der in Fig. 14 veranschaulichten Weise mit zwei Halterungsbauteilen 120 insgesamt sechs Sammelschienen 22b - anstelle von nur drei solcher Sammelschienen 22b mit Halterungsbauteilen 20 - zu fixieren.

Durch die bei Verwendung der Halterungsbauteile 120 vorgesehenen zusätzlichen weiteren querlaufenden Vertiefungen werden aufgrund der Positionierung der Sammelschienen in gegenüber der Halterung von Sammelschienen zwischen Halterungsbauteilen 20 um 90° verdrehter hochkant positionierter Lage der Sammelschienen 22b bzw. 22e zwischen den Halterungsbauteilen 120 einerseits die Abstände zwischen den Sammelschienen 22b vergrößert, so dass eine höhere Sicherheit gegen Kriechströme oder Überschläge zwischen den Sammelschienen und andererseits wird durch die Möglichkeit einer Verdoppelung der Anzahl der zu halternden Sammelschienen 22b eine verbesserte Abfuhr der Verlustwärme in den Sammelschienen erreicht.

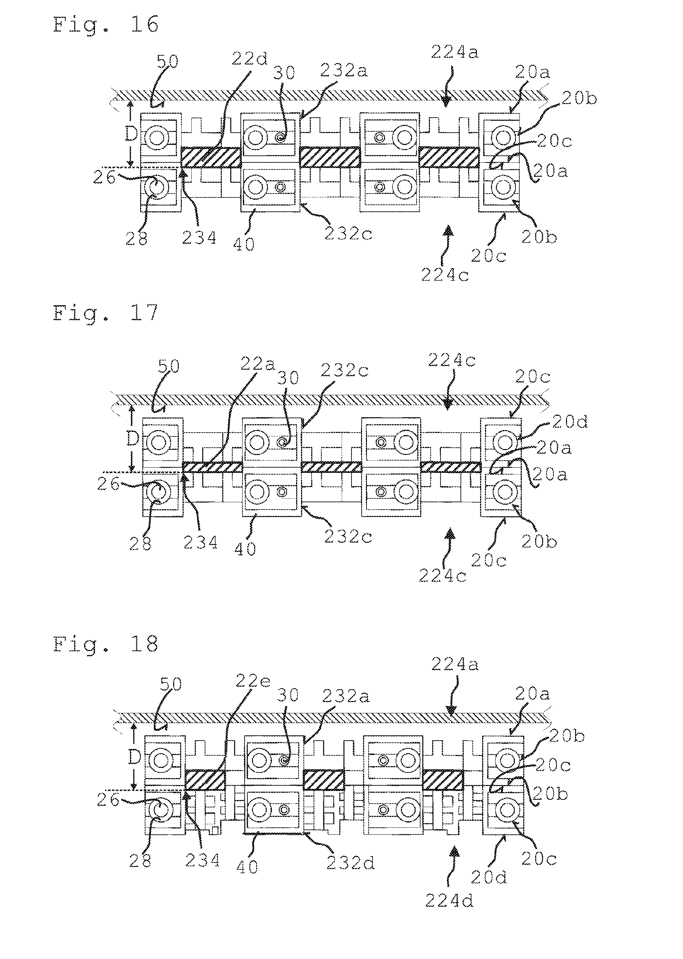

In den Fig. 16 bis 21 sind verschiedene Kombinationen von zwei Halterungsbauteilen 220 gezeigt, die übereinander angeordnet eine Halterungseinrichtung bilden und zwischen denen jeweils drei gleichartige Sammelschienen 22a, 22b, 22c, 22d, 22e, 22f festgelegt sind. Die Halterungsbauteile 220 weisen eine gegenüber den Ausführungsbeispielen der vorangehenden Figuren abweichende Formgebung auf. Während die beabstandet zueinander ausgebildeten Befestigungsabschnitte 40, in denen die Befestigungsbohrungen 26 sowie die Gewindebohrungen 30 angeordnet sind, weitgehend identisch zu den anderen Ausführungsbeispielen ausgestaltet sind, weisen die an den einzelnen Flachseiten 20a, 20b, 20c und 20d ausgebildeten Aufnahme-Vertiefungen 224a, 224b, 224c und 224d jeweils eine komplexe Formgebung und Kontur auf. Durch diese komplexe Formgebung der Aufnahme-Vertiefungen 224a, 224b, 224c und 224d wird erreicht, dass unabhängig von den im Einzelfall verwendeten Sammelschienen 22a, 22b, 22c, 22d, 22e, 22f jede einzelne Sammelschiene 22a, 22b, 22c, 22d, 22e, 22f relativ zu einem oberhalb der beiden Halterungsbauteile 220 dargestellten, üblicherweise durch eine Rückwand oder eine Montageplatte gebildeten Untergrund 50 einen identisch übereinstimmenden Abstand sowie eine identisch übereinstimmende Ausrichtung in Längsrichtung der Halterungsbauteile 220 relativ zu dem zugeordneten Befestigungsabschnitt 40 aufweist.

Bei den gezeigten Abbildungen gemäß den Fig. 16 bis 21 liegen alle Sammelschienen 22a, 22b, 22c, 22d, 22e, 22f mit ihrer linken unteren Ecke der Querschnittsfläche jeweils auf einer Bodenfläche der zugeordneten Aufnahme-Vertiefung 224a, 224b, 224c und 224d sowie an einer den Befestigungsabschnitt 40 seitlich begrenzenden Anschlagsfläche 232a, 232b, 232c oder 232d an. Durch die Formgebung der Bodenfläche und der seitlichen Begrenzungen der Aufnahme-Vertiefungen 224a, 224b, 224c und 224d kann für jede Sammelschiene 22a, 22b, 22c, 22d, 22e, 22f eine Referenzecke 234 vorgegeben werden, die jeweils denselben Abstand zum Untergrund 50 und jeweils denselben Abstand relativ zu dem unmittelbar angrenzenden Befestigungsabschnitt 40 aufweist.

Um die verschiedenen Sammelschienen 22a, 22b, 22c, 22d, 22e, 22f jeweils identisch zu der zugeordneten Referenzecke 234 ausrichten und in dieser Position klemmend festlegen zu können ist es erforderlich, dass die beiden übereinander angeordneten Halterungsbauteile 220 in geeigneter Weise um ihre Längsachse verkippt oder in Längsrichtung in entgegengesetzter Ausrichtung zueinander ausgerichtet werden.

Zur Veranschaulichung werden in Fig. 16 mehrere Sammelschienen 22d mit einer Querschnittsfläche von 30 x 10 mm festgelegt. Um gemäß der in Fig. 17 gezeigten Variante statt dessen mehrere Sammelschienen 22a mit einer Querschnittsfläche von 30 x 5 mm mit derselben Ausrichtung relativ zu der linken unteren Ecke 234 der Querschnittsflächen der Sammelschienen 22d, bzw. 22a festlegen zu können muss das in Fig. 17 oben dargestellte Halterungsbauteil 220 um eine Längsachse 60 um 180° verkippt werden, so dass die entgegengesetzte Flachseite 20a dem unteren Halterungsbauteil 220 und dessen nach oben zeigender Flachseite 20a zugewandt ist.

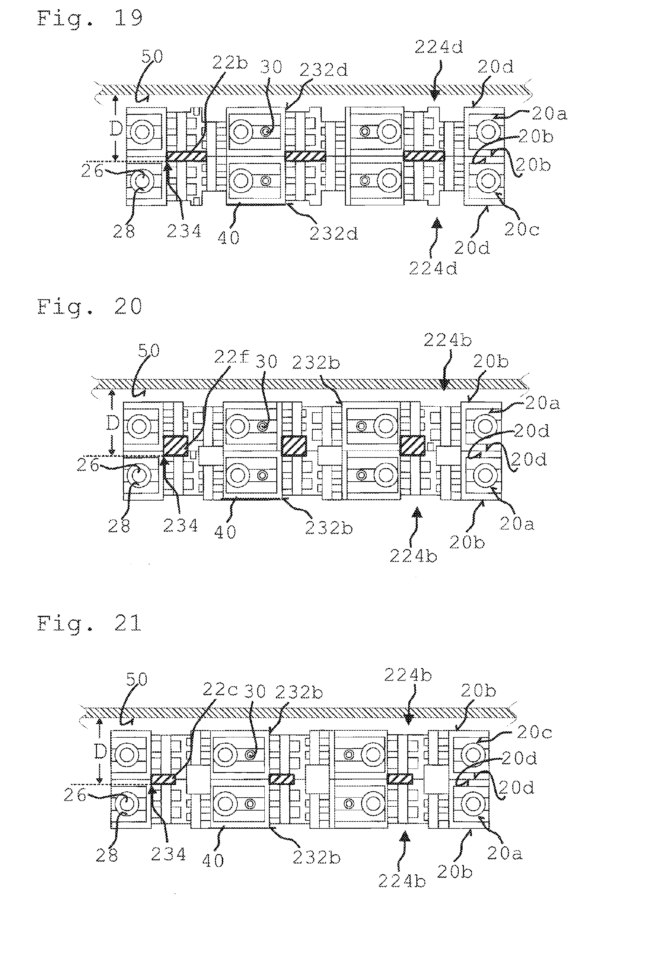

Um an Stelle der in Fig. 20 dargestellten Aufnahme von mehreren Sammelschienen 22f mit einer Querschnittsfläche von 12 x 10 mm mehrere Sammelschienen 22c mit einer Querschnittsfläche von 12 x 5 mm zwischen zwei Halterungsbauteilen 220 bei gleichbleibender Ausrichtung der jeweiligen linken unteren Ecke aufnehmen zu können, wie es in Fig. 21 dargestellt ist, muss das obere Halterungsbauteil 220 um eine Mittenachse 70 senkrecht zur Längsrichtung verdreht werden, so dass jeweils die in Fig. 20 dargestellte linke Seite einer jeden Aufnahme-Vertiefung 224b sowie das linke Ende des oberen Halterungsbauteils 220 bei der in Fig. 21 dargestellten Ausrichtung und Anordnung des oberen Halterungsbauteils 220 jeweils die rechte Seite einer jeden Aufnahme-Vertiefung 224b sowie das rechte Ende des oberen Halterungsbauteils 220 bilden.

Es ist ersichtlich, dass im Rahmen des Erfindungsgedankens Abwandlungen und Weiterbildungen der beschriebenen Ausführungsbeispiele verwirklichbar sind, welche sich z. B. auf abweichenden Anordnungen und Bemessungen von weiteren zusätzlichen querverlaufenden Vertiefungen für den Fall bezieht, dass die zu halternden Sammelschienen von den in Niederspannungs-Energieverteilernetzen heute übliche Sammelschienen abweichende Querschnittsabmessungen haben.

## Patentansprüche

1. Halterungsanordnung für die ortsfeste Montage und Halterung von im Querschnitt im Wesentlichen rechteckigen oder quadratischen Sammelschienen (22a; 22b; 22c; 22d; 22e; 22f) von insbesondere dreiphasigen elektrischen Niederspannungs-Energieverteilernetzen in vorgegebenem Abstand auf einem Untergrund, wobei die Halterungsanordnung ein Paar von in Übereinanderlage auf dem Untergrund befestigbaren langgestreckten Halterungsbauteilen (20; 120; 220) aus elektrisch isolierendem Material aufweist, wobei die Halterungsbauteile an den Querschnitt der jeweiligen Sammelschiene angepasste querverlaufende Vertiefungen (24a, 24b, 24c 24d; 124a, 124b, 124c, 124d; 224a, 224b, 224c, 224d) zur passenden Aufnahme der Sammelschienen in den einander zugewandten Flachseiten (20a; 20b; 20c; 20d) der Halterungsbauteile (20; 120; 220) in der Montageposition aufweisen, wobei die langgestreckten Halterungsbauteile (20; 120; 220) jedes Bauteilpaares gleiche Abmessung aufweisen, und in den äußeren Flachseiten (20a; 20b; 20c; 20d) der Halterungsbauteile (20; 120; 220) eine der Anzahl der zu halternden Sammelschienen entsprechende Anzahl von im vorgegebenen Abstand voneinander querverlaufenden Aufnahme-Vertiefungen (24a, 24b, 24c, 24d; 124a, 124b, 124c, 124d; 224a, 224b, 224c, 224d) vorgesehen sind, deren Breite jeweils der Breite und deren Tiefe jeweils höchstens gleich der Dicke der zu halternden Sammelschienen (22a; 22b; 22c; 22d; 22e; 22f) entsprechend bemessen sind, und wobei Befestigungsmittel zur Befestigung des Paars von Halterungsbauteilen (20; 120; 220) in Übereinanderlage mit den in den zueinander ausgerichteten Aufnahme-Vertiefungen (24a; 24b; 24c; 24d ; 124a, 124b, 124c,124d; 224a, 224b, 224c, 224d) vorgesehenen eingespannten Sammelschienen auf dem Untergrund vorgesehen sind, **dadurch gekennzeichnet, dass** für die Halterung von im Querschnitt rechteckigen oder quadratischen Sammelschienen (22a; 22b; 22c; 22d; 22e; 22f) mit unterschiedlicher Größe ihrer Querschnittsfläche die querverlaufenden Aufnahme-Vertiefungen (24a; 24b; 24c; 24d) in den jeweils vier um 90° zueinander verlaufenden Flachseiten (20a; 20b; 20c; 20d) der Halterungsbauteile (20; 120; 220) vorgesehen sind und dass in den Bodenflächen zumindest eines Teils der querverlaufenden Aufnahme-Vertiefungen (24a; 24b; 24c; 24d ; 124a, 124b, 124c,124d; 224a, 224b, 224c, 224d) zusätzliche querverlaufende Vertiefungen geringerer Breite und größerer Tiefe für weitere Sammelschienen mit abweichenden Querschnitten vorgesehen sind.

2. Halterungsanordnung nach Anspruch 1, **dadurch gekennzeichnet, dass** die in den in den Flachseiten der Halterungsbauteile (120) vorgesehenen querverlaufenden Aufnahme-Vertiefungen (24a, 24b, 24c, 24d) vorgesehenen zusätzlichen querverlaufenden Vertiefungen eine geringere Breite und größere Tiefe als die Aufnahme-Vertiefungen in ihren an die zugeordneten Flachseiten anschließenden Bereichen haben, und dass die von der zugeordneten Flachseite (20a, 20b, 20c, 20d) des Halterungsbauteils (120) aus gemessene Tiefe der zusätzlichen querverlaufenden Vertiefungen jeweils der halben zwischen den im Querschnitt längeren Begrenzungskanten einer Querschnittsfläche der im Querschnitt rechteckigen Sammelschienen gemessenen Dicke einer jeweils zugeordneten Sammelschiene (22b, 22c; 22e, 22f) und deren Breite gleich der Länge der längeren Begrenzungskanten der Sammelschiene entsprechend bemessen ist.

3. Halterungsanordnung nach Anspruch 2, **dadurch gekennzeichnet, dass** in wenigstens einer der Flachseiten der Halterungsbauteile (120) jeweils wenigstens eine weitere zusätzliche querverlaufende Vertiefung (124a'; 124c') geringerer Breite und größerer Tiefe vorgesehen ist, deren von der zugeordneten Flachseite des Halterungsbauteils (120) aus gemessene Tiefe jeweils der halben Länge der längeren Begrenzungskanten der Querschnittsflächen der im Querschnitt rechteckigen jeweils zugeordneten Sammelschiene (22e; 22b) und deren Breite gleich der zwischen den gegenüberliegenden Flachseiten der zugehörigen Sammelschiene gemessenen Dicke ist.

4. Halterungsanordnung nach Anspruch 3, **dadurch gekennzeichnet, dass** jeweils zwei in Richtung einer Längsmittelachse der Halterungsbauteile (120) voneinander beabstandete zusätzliche Vertiefungen (124c') in der jeweils zugeordneten Aufnahme-Vertiefung (124c) der Halterungsbauteile (120) vorgesehen sind.

5. Halterungsanordnung nach einem der Ansprüche 1 bis 4, **dadurch gekennzeichnet, dass** die für die Halterung von im Querschnitt rechteckigen oder quadratischen Sammelschienen (22a; 22b; 22c; 22d; 22e; 22f) mit unterschiedlicher Größe ihrer Querschnittsfläche vorgesehenen, jeweils einander zugeordneten querverlaufenden Aufnahme-Vertiefungen (224a, 224b, 224c, 224d) der Halterungsbauteile (220) hinsichtlich ihrer von der zugeordneten Flachseite (20a; 20b; 20c; 20d) des Halterungsbauteils (220) aus gemessenen Tiefe so angeordnet sind, dass jede der im Querschnitt rechteckigen oder quadratischen Sammelschienen (22a; 22b; 22c; 22d; 22e; 22f) zwischen den beiden Halterungsbauteilen (220) so festgelegt werden kann, dass eine dem Untergrund (50) abgewandte Oberseite der betreffenden Sammelschiene (22a; 22b; 22c; 22d; 22e; 22f) einen für alle Sammelschienen (22a; 22b; 22c; 22d; 22e; 22f) übereinstimmenden Abstand von dem Untergrund (50) aufweist.

6. Halterungsanordnung nach Anspruch 5, **dadurch gekennzeichnet, dass** für alle Sammelschienen (22a; 22b; 22c; 22d; 22e; 22f) die von der zugeordneten Flachseite (20a; 20b; 20c; 20d) eines der beiden Halterungsbauteile (220) aus gemessene Tiefe der für die Halterung der betreffenden Sammelschiene (22a; 22b; 22c; 22d; 22e; 22f) vorgesehenen querverlaufenden Aufnahme-Vertiefung (224a, 224b, 224c, 224d) gleich ist und die von der zugeordneten Flachseite (20a; 20b; 20c;
20d) des anderen Halterungsbauteils (220) aus gemessene Tiefe der für die Halterung der betreffenden Sammelschiene (22a; 22b; 22c; 22d; 22e; 22f) vorgesehenen querverlaufenden Aufnahme-Vertiefung (224a, 224b, 224c, 224d) an die Abmessungen der betreffenden Sammelschiene (22a; 22b; 22c; 22d; 22e; 22f) angepasst ist, so dass die dem Untergrund abgewandte Oberseite der betreffenden Sammelschiene (22a; 22b; 22c; 22d; 22e; 22f) den für alle Sammelschienen (22a; 22b; 22c; 22d; 22e; 22f) übereinstimmenden Abstand von dem Untergrund aufweist.

7. Halterungsanordnung nach einem der Ansprüche 5 oder 6, **dadurch gekennzeichnet, dass** für alle Sammelschienen (22a; 22b; 22c; 22d; 22e; 22f) die jeweils vorgesehene querverlaufende Aufnahme-Vertiefung (224a, 224b, 224c, 224d) eine in Richtung der Längsmittelachse der Halterungsbauteile (220) übereinstimmend angeordnete Anschlagsfläche (232a, 232b, 232c, 232d) aufweist, mit welcher eine Ausrichtung der Sammelschienen (22a; 22b; 22c; 22d; 22e; 22f) in Längsrichtung der Halterungsbauteile (220) vorgebbar ist.

8. Halterungsanordnung nach einem der vorausgehenden Ansprüche, **dadurch gekennzeichnet, dass** in zu den querverlaufenden Vertiefungen versetzten Bereichen der Halterungsbauteile (20; 120; 220) jeweils von einer Flachseite (20a; 20b; 20c; 20d) zur gegenüberliegenden Flachseite (20a; 20b; 20c; 20d) durchgehende Befestigungsbohrungen (26) für Befestigungsschrauben vorgesehen sind.

9. Halterungsanordnung nach Anspruch 8, **dadurch gekennzeichnet, dass** die Befestigungsbohrungen (26) jeweils beidseitig in ihren Endbereichen mit Ansenkungen (28) zur Aufnahme der Köpfe von zugeordneten Befestigungsschrauben versehen sind.

10. Halterungsanordnung nach Anspruch 8 oder 9, **dadurch gekennzeichnet, dass** die Längsmittelachsen von jeweils zwei zwischen den beiden um 90° zueinander verlaufenden äußeren Flachseitenpaaren der Halterungsbauteile (20; 120; 220) vorgesehenen Befestigungsbohrungen (26) sich rechtwinklig scheidend in jeweils gleichen Querschnittsebenen der Halterungsbauteile (20; 120; 220) angeordnet sind.

11. Halterungsanordnung nach einem der Ansprüche 8 bis 10, **dadurch gekennzeichnet, dass** in Längsrichtung zu den Befestigungsbohrungen (26) versetzt zusätzliche Gewindebohrungen (30) in den Flachseiten (20a; 20b; 20c; 20d) der Halterungsbauteile (20; 120; 220) vorgesehen sind.

12. Halterungsanordnung nach Anspruch 11, **dadurch gekennzeichnet, dass** jeweils wenigstens zwei in Längsrichtung voneinander beabstandete Gewindebohrungen (30) in den Flachseiten (20a; 20b; 20c; 20d) vorgesehen sind.

13. Halterungsanordnung nach Anspruch 11 oder 12, **dadurch gekennzeichnet, dass** die Gewindebohrungen (30) jeweils von einer zur gegenüberliegenden Flachseite (20a; 20b; 20c; 20d) durchgehen und dass die Längsmittelachse von jeweils zwei zwischen den beiden um 90° zueinander verlaufenden äußeren Flachseitenpaaren (20a, 20c; 20b, 20d) der Halterungsbauteile (20; 120; 220) vorgesehenen Gewindebohrungen (30) sich rechtwinklig schneidend in jeweils gleichen Querschnittsebenen der Halterungsbauteile (20; 120; 220) angeordnet sind.

14. Halterungsanordnung nach einem der Ansprüche 11 bis 13, **dadurch gekennzeichnet, dass** die Befestigungsbohrungen (26) und die Gewindebohrungen (30) jeweils in gleichen Querschnittsebenen der Halterungsbauteile (20; 120; 220) vorgesehen sind.

15. Halterungsanordnung nach einem der Ansprüche 11 bis 14, **gekennzeichnet durch** ebenflächige Platten- oder Streifenelemente vorgegebener Größe aus elektrisch isolierendem Plattenmaterial zur Befestigung auf jeweils einer zugeordneten Flachseite (20a; 20b; 20c; 20d) der Halterungsbauteile (20; 120; 220).
